# EUROPEAN PATENT SPECIFICATION

(11) **EP 1 698 813 B1**
(45) Date of publication and mention of the grant of the patent: **02.09.2009**
(21) Application number: 06075474.4
(22) Date of filing: 01.03.2006
(51) Int. Cl.: F16K 15/03, F16K 27/02

(54) **A valve**
Ventil
Soupape

(30) Priority: 04.03.2005 GB 0504413
(43) Date of publication of application: 06.09.2006
(73) Proprietor: Hall, Raymond, Holywood, County Down BT18 9NG (GB); Andrews, Nancy, Cypress TX 77429 (US); Topping, David, Limavady, County Londonderry BT49 0UD (GB)
(72) Inventor: Hall, Raymond, Holywood, County Down BT18 9NG (GB); Andrews, Nancy, Cypress TX 77429 (US); Topping, David, Limavady, County Londonderry BT49 0UD (GB)
(74) Representative: Wallace, Alan Hutchinson

(56) References cited:
- EP-A- 0 361 731
- US-A- 4 694 853
- US-A- 5 246 032
- US-A- 5 819 790

## Description

### Field of the Invention

The present invention relates to valves. In particular, the invention relates to twin-plate wafer check valves.

### Background to the Invention

Twin-plate (also known as dual-plate or split-disc) wafer check valves are primarily used in the hydrocarbon and energy industries, for handling dangerous and/or poisonous fluids being transported through piping systems or the like. These valves are used to prevent back flow in such piping systems. In systems that handle dangerous and/or poisonous fluids, it is necessary to reduce the number of possible leakage paths for the fluid from inside the piping system to atmosphere or the surroundings. The conventional structure for this type of valve incorporates up to four screwed retainers that pierce the annular side wall of the valve body. These piercings are prone to leakage.

The need to overcome potential leakages in this type of valve has led to the design of "retainerless" valves, for example as described and illustrated in US patent US 4,694,853.

United States Patent 5,246,032 (Muddiman) discloses a retainerless type valve. It is considered that Muddiman's means for locating and retaining the leaf assembly in position can be improved upon.

The present invention has been developed as an improved retainerless valve.

### Summary of the Invention

Accordingly, the present invention provides a valve as claimed in claim 1.

Advantageously, said seats are provided on a respective projection, or abutment, which projects from the housing radially inwardly of, the passage.

Typically, the projections are substantially oppositely disposed in the housing, and may be substantially diametrically opposed where the housing is generally circular in cross section.

In preferred embodiments, a respective flange is provided at each end of the housing, each flange extending radially inwardly, of the housing.

The housing may comprises an annular wall from a respective end of which said flanges extend, the annular wall having an inner surface from which said projections project.

Advantageously, said support members are engagable, preferably slidably engagable, with their respective seats upon relative rotation of said cross piece and said housing about the longitudinal axis of said passage.

The valve includes means for retaining the support members in the seats. The retaining means comprises a clip having at least one leg, each of said flange portions of a first of said flanges including at least one respective aperture aligned with a corresponding socket formed in the respective support member when the support member is seated in its seat, said at least one leg being insertable through said at least one aperture and into the corresponding socket. Each clip may for example comprise a U-shaped clip with two legs. Said first flange is typically provided at the end of the valve which serves as the outlet during normal use.

The at least one socket preferably comprises a through bore, and each of the flange portions of the other of the flanges includes a corresponding socket for receiving said at least one leg when inserted through said through bore. Advantageously, each socket provided in said other flange comprises a blind aperture.

In a preferred embodiment, the valve comprises an annular housing; a pair of radially inward extending flanges, one adjacent each open end of the housing; a pair of substantially diametrically opposed projections, or abutments, extending radially inward from the housing; a valve closure assembly, typically a leaf assembly; two support members between which the valve closure assembly is mounted, each support being engaged against one of the abutments; and preferably retention means operable to secure each support to the respective abutment.

Each flange preferably overlaps the supports when seated on the pair of abutments. Preferably, the retention means comprises a respective retaining pin for each support, each of which passes through, in use, at least one of the flanges and into a respective one of the supports.

The support members may be adapted to receive a respective end of more than one cross piece. The cross piece(s) may for example comprise a support bar or pivot pin for one or more valve closure members, and/or a stop bar.

The valve closure assembly typically comprises a leaf closure assembly comprising at least one, but typically two, valve closure leaf pivotally mounted to a cross piece in the form of a hinge pin which is retained by and between the support members.

Further advantageous aspects of the invention will become apparent to those ordinarily skilled in the art upon review of the following description of a specific embodiment and with reference to the accompanying drawings.

### Brief Description of the drawings

An embodiment of the present invention is now described by way of example and with reference to the accompanying drawings, in which:
Figure 1 illustrates a perspective view of a valve embodying the invention;

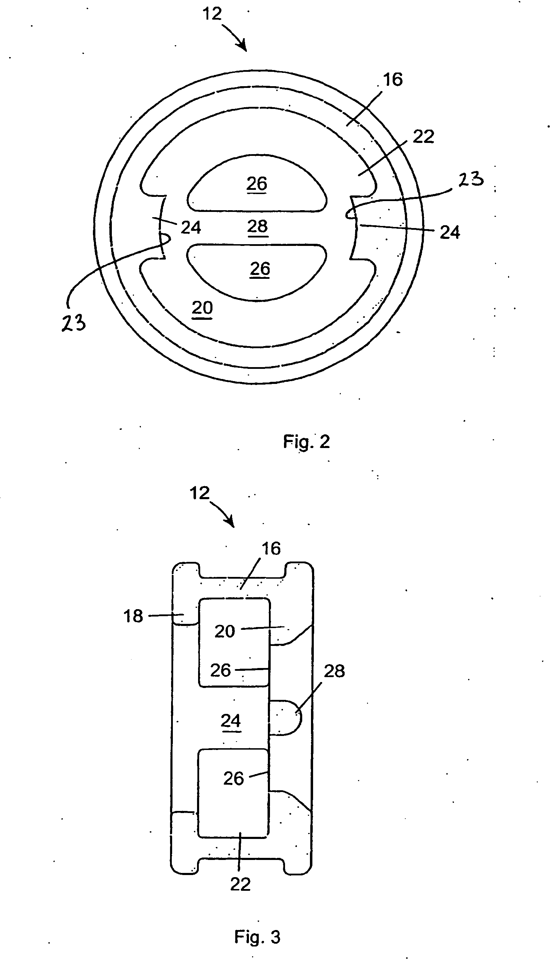

Figure 2 illustrates a sectioned plan view of a housing forming part of the valve of Figure 1;
Figure 3 illustrates a sectioned side elevation of the housing illustrated in Figure 2;
Figure 4 illustrates a side elevation of a support forming part of the valve according to the present invention;
Figure 5 illustrates a plan view of the support illustrated in Figure 4; and

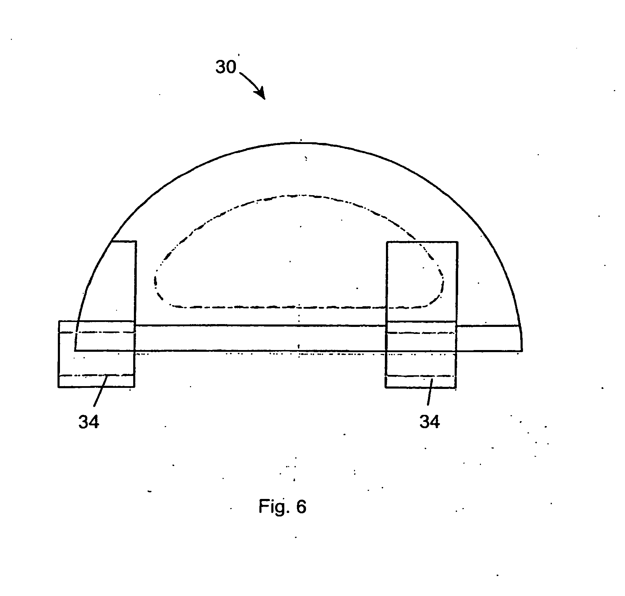

Figure 6 illustrates a plan view of a valve leaf forming part of the valve of the present invention.

### Detailed Description of the Drawings

Referring now to the accompanying drawings there is shown, generally indicated as 10, a valve embodying the invention. The valve 10 is a check, or non-return, valve and so allows only unidirectional flow of a fluid (typically a liquid) therethrough. The illustrated valve 10 is of a general type known as twin-plate, dual-plate or split-disc, wafer check valves. Typically, such valves are incorporated into pipes especially in applications where the transport of an unstable or dangerous fluid is required.

The valve 10 comprises an open-ended body or housing 12 which is generally annular or sleeve-like in form and is typically, but not necessarily, substantially circular in cross-section taken perpendicular to its longitudinal axis. The housing 12 defines a passage through which fluid may pass during use. A valve closure assembly, typically in the form of a leaf assembly 14, is provided in the housing 12 and is arranged, as will be described in more detail hereinafter, to allow the unidirectional flow of fluid through the housing 12 in a longitudinal direction, i.e. generally parallel with said longitudinal axis.

The housing 12, which is preferably formed of metal, for example an alloy of steel or the like, comprises a substantially annular side wall 16 and a radially extending first flange 18 located at one end of the side wall 16, and a radially extending second flange 20 located at an opposite end of the side wall 16. The flanges 18, 20 project radially inward of the side wall 16. The flanges 18, 20 extend at least partially around, and preferably entirely around, the periphery of the housing 12. The flanges 18, 20 and the inner surface of the side wall 16 define a channel 22 which runs at least partially around the inside of the housing 12. In normal use, the aperture defined by the first flange 18 serves as the outlet of the valve, while the aperture(s) defined by the second flange serves as the inlet.

A respective seat 23 for receiving a respective support member is provided in the housing 12. Preferably, two seats 23 are provided, the seats 23 being oppositely disposed in the housing 12 (typically substantially diametrically opposite one another where the housing is generally circular). The surface of the seats 23 is preferably concave. The seats 23 may be formed in the inner surface of the side wall 16 or channel 22. In the preferred embodiment, each seat 23 is provided on a respective projection 24 extending from the inner surface of the side wall 16 or channel 22. In the preferred embodiment, two projections 24 are provided and are substantially oppositely disposed in the housing 12 (typically substantially diametrically opposite one another where the housing is generally circular). The projections 24, or abutments 24, are preferably formed integrally with the side wall 16. The abutments 24, as will be described in more detail hereinafter, facilitate securing the leaf assembly 14 within the housing 12.

In order to enable the unidirectional flow of fluid through the valve 10, the housing 12 includes at least one opening, but in typical embodiments two openings 26 or apertures. The openings 26 are defined by the second flange 20 and a cross-piece or web 28 which is preferably formed integrally with the second flange 20 and which preferably extends substantially diametrically across the housing 12.

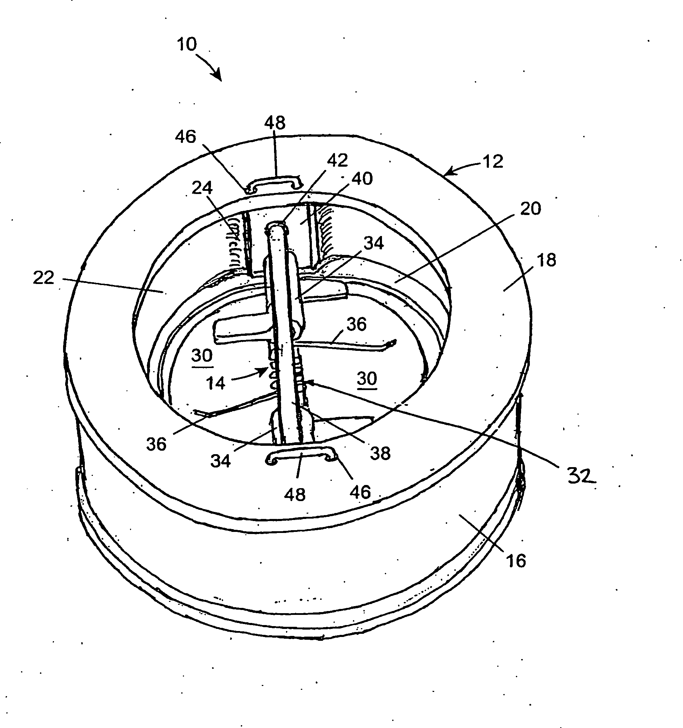

In preferred embodiments, the leaf assembly 14 comprises two valve closure members or leaves 30. Each leaf 30 is associated with a respective opening 26 and is operable between an open state (in which the respective opening 26 is open) and a closed state (in which the respective opening 26 is closed). In the embodiment illustrated the leaves 30 are substantially D-shaped and each have a slightly larger area than the respective opening 26 which the leaf 30 covers during use. The leaves 30 are pivotably mounted or coupled to a hinge pin 32 which extends, typically diametrically, across the valve 10. Each leaf 30 may be mounted to the hinge pin 32 by means of a respective collar 34 which may be formed integrally with the leaf 30. A spring 36, or other resilient biasing means, is also provided on, or coupled to, the hinge pin 32 (or otherwise associated with the leaves 30), and arranged to act on each of the leaves 30 in order to urge same into the closed state as illustrated in Figure 1, thereby occluding the respective opening 26. The second flange 20 and the web 28 act as, or define, a valve seat against which the leaves 30 are seated in order to seal the openings 26.

Each of the leaves 30 is pivotable, against the bias of the spring 36, into the open state to expose the respective openings 26 and so to allow the flow of fluid through the valve 10. It will be apparent that fluid flowing in a direction from the second flange 20 towards the first flange 18 will force the leaves 30 open, thereby allowing the fluid to flow through the valve 10. However, if this flow is reversed, the spring 36 forces the leaves 30 into the closed state, thereby preventing the reversal of flow through the valve 10.

The leaf assembly 14 may also include a stop pin 38 which extends, typically diametrically, across the valve 10. When present, the stop pin 38 typically runs substantially parallel with the hinge pin 32 and spaced therefrom substantially in said longitudinal direction. The stop pin 38 acts to arrest movement of the leaves 30 as they are pivoted into the open position, in order to prevent the leaves 30 from knocking into one another as they reach the fully open position (in which the leaves 30 are typically substantially parallel to one another). Any other suitable means could be employed to achieve this function, e.g. the provision of abutments on the leaves 30 which engage when the leaves are fully open.

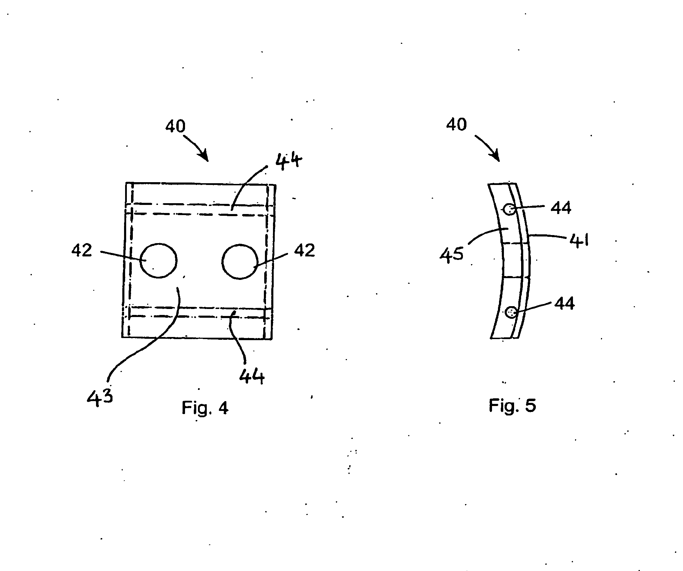

The leaf assembly 14, and in particular the hinge pin 32 and stop pin 38, are mounted to and between a pair of support members 40, which are illustrated in isolation in Figure 4. Each support 40 includes a respective socket 42 for receiving an end of the hinge pin 32 and of the stop pin 38 when present. The sockets 42 are formed in, or open onto, an obverse face 43 of the support 40 and are preferably blind sockets, i.e. they do not extend wholly through the support. In use each support 40 is seated in or against a respective seat 23 of a respective abutment 24, as illustrated in Figure 1, such that the obverse face 43 faces inwardly of the housing 12. The reverse face 41 of the support 40 is advantageously shaped, e.g. curved, to match the shape of the seat 23. In the preferred embodiment, the supports 40 are curved in cross section.

In order to retain the supports 40 in position, each support 40 includes at least one and preferably two apertures or sockets, preferably in the form of through-bores 44 as illustrated in Figure 5. The bores 44 open onto at least one side face 45 of the support 40 (and onto both side faces when the bores 44 are through-bores), the side faces being substantially or generally perpendicular with the face in which the sockets 42 are formed.

At least the first flange 18 is provided with one or more corresponding apertures 46 which, when the supports 40 are seated in the seats 23, are aligned with the bores 44. For each support 44, a retaining clip, for example a U-shaped retaining clip 48, may have a respective leg (not visible) passed through a respective aperture 46 in the first flange 18 and through a respective bore 44 in the support 40. Preferably, where the bores 44 are through-bores, a respective correspondingly positioned recess, socket or blind aperture (not visible) is provided in the second flange 20 to receive a respective free end of the clip 48. If the blind apertures (not shown) in the second flange 20 were provided as through apertures, a possible leakage path would be provided across the valve 10. Once the retaining clips 48 have been located as described, it is preferred to actively secure same in place. This may be achieved by any suitable means, for example by deforming the apertures 46 using a staking tool (not shown) or the like. Any other mechanical means of fixing the clips 48 in place could however be utilised.

Each retaining clip 48 therefore secures the respective support 40 relative to the respective abutment 24. This means of securing the supports 40 in place, and thus securing the leaf assembly 14 within the housing 12, does not require the side wall 16 to be pierced by any fixing means, thereby avoiding the possibility of any leakage of fluid from the valve 10 through the side wall 16.

The preferred mounting arrangement between the leaf assembly 14 and the abutments 24 provides a further advantage. During the manufacture of the valve 10, or the repair or maintenance thereof, the entire leaf assembly 14, mounted between the pair of supports 40, may be inserted into the housing 12 as a single unit, greatly simplifying the manufacture/repair of the valve 10. This is achieved by mounting the leaf assembly 14, and in particular the pair of supports 40, between the upstanding abutments 24, thereby rendering the combined length of the hinge pin 32 and supports 40 less than the diameter of the channel 22. In this way, during the manufacture of the valve 10, the leaf assembly 14 may be inserted into the housing 12 as follows. One side of the leaf assembly 14, as defined by the respective support 40, is passed through the first flange 18, and pressed into the channel 22, away from either of the abutments 24. Due to the relatively short length of the leaf assembly 14 relative to the diameter of the channel 22, the opposed end of the leaf assembly 14, defined by the other of the two supports 40, may then be passed through the first flange 18, and into the channel 22. At this point the leaf assembly 14 may be rotated within the housing 12, about the longitudinal axis of the housing 12, until the supports 40 come into alignment with, and are seated against, the respective abutment 24. To this end, the seats 23 and the supports 40 (especially the reverse faces 41 thereof) are shaped to allow relative sliding engagement (and disengagement) between one another upon rotation of the leaf assembly, or other valve closure assembly, about the longitudinal axis of the valve 10. Where the supports 40/seats 23 are curved, the respective curvatures are sufficiently shallow to allow this. The retaining clips 48 may then be passed through the first flange 18 and the supports 40, and then into but not through the second flange 20, in order to secure the leaf assembly 14 in place. It will be apparent that this process may be quickly and easily reversed if it is necessary to remove the leaf assembly 14 from the housing 12.

The valve 10 avoids the need for any fasteners or fixings to pierce the side wall 16, thereby reducing the possibility of leakages from the valve 10, in addition to providing an arrangement which greatly simplifies the manufacturing and/or repair of the valve 10.

It will be understood that the invention is not limited to use with twin-plate wafer check valves, or to valves having the leaf assembly 14 described above. More generally, the invention is applicable to valves having a valve closure assembly which is mountable in the valve, includes at least one cross piece, bar or other member which, when mounted, extends across the inside of the valve, i.e. across the fluid passage defined by the valve, and is typically supported by the side walls of the valve.

Moreover, it is found that valves embodying the invention have an increased internal volume when compared to similar conventional valves and this leads to an improvement in the flow characteristics, for example an improved valve coefficient *Cᵥ*. In addition, valves embodying the invention are found to create a more stable fluid flow than is present in conventional comparable valves and this reduces vibration of the stop pin which can cause excessive wear.

The present invention is not limited to the embodiment described herein, which may be modified or varied without departing from the scope of the present invention.

## Claims

1. A valve (10) comprising an open-ended housing (12) defining a passage through which fluid may flow during use; a valve closure assembly (14) mountable in the housing, the valve closure assembly including a cross piece (32, 38), a respective support member (40) being provided at each end of the cross piece; a respective seat (23) provided in the housing for each support member, each support member being engagable with a respective one of said seats to mount the cross piece across the passage; a respective flange (18, 20) provided at each end of the housing, each flange extending inwardly of the housing, and extending at least partially around the periphery of the respective end, wherein said seats are provided on a respective projection (24) which projects from the housing inwardly of the passage, a respective portion of each flange being in register with the projections (24), at least said flange portion extending inwardly further than said respective projection, the valve further including means for retaining the support members in the seats, **characterised in that** the retaining means comprises a clip (48) having at least one leg, each of said flange portions of a first of said flanges including at least one respective aperture (46) aligned with a corresponding socket (44) formed in the respective support member when the support member is seated in its seat, said at least one leg being insertable through said at least one aperture (46) and into the corresponding socket (44).

2. A valve as claimed in Claim 1, wherein said projections (24) project from the housing (12) radially inwardly of the passage.

3. A valve as claimed in any preceding Claim, whereinsaid respective flanges extend radially inwardly of the housing.,

4. A valve as claimed in and one of Claims 1 to 3, wherein the housing comprises an annular wall (16) from a respective end of which said flanges extend, the annular wall (16) having an inner surface from which said projections project.

5. A valve as claimed in any preceding claim in which said support members (40) are engagable with their respective seats (23) upon relative rotation of said cross piece and said housing about the longitudinal axis of said passage.

6. A valve as claimed in claim 5, wherein said seat surface is concave and said support members (40) have a surface for engaging with the respective seat that is correspondingly curved.

7. A valve as claimed in any preceding claim, wherein the respective socket (44) comprise a through bore, and each of the flange portions of the other of the flanges includes a corresponding socket for receiving said at least one leg when inserted through said through bore.

8. A valve as claimed in Claim 7, wherein each socket provided in said other flange comprises a blind aperture.

## Patentansprüche

1. Ventil (10), umfassend:
ein offenendiges Gehäuse (12), das einen Durchgang definiert, durch den ein Fluid in Gebrauch strömen kann;
eine im Gehäuse montierbare Ventilverschlusseinheit (14), wobei die Ventilverschlusseinheit einen Querriegel (32, 38) umfasst und ein jeweiliges Halteglied (40) an jedem Ende des Querriegels vorgesehen ist;
einen jeweiligen Sitz (23), der für jedes Halteglied im Gehäuse vorgesehen ist, wobei jedes Halteglied mit einem jeweiligen der Sitze in Eingriff treten kann, um den Querriegel über den Durchgang zu montieren;
einen jeweiligen Flansch (18, 20), der an jedem Ende des Gehäuses vorgesehen ist, wobei sich jeder Flansch in das Gehäuse hinein erstreckt und sich mindestens teilweise um den Umfang des jeweiligen Endes erstreckt, wobei die genannten Sitze an einem jeweiligen Vorsprung (24) vorgesehen sind, der von dem Gehäuse nach innen in den Durchgang ragt, wobei ein jeweiliger Abschnitt jedes Flanschs mit den Vorsprüngen (24) in Register ist, und mindestens der genannte Flanschabschnitt sich weiter nach innen erstreckt als der genannte jeweilige Vorsprung, wobei das Ventil weiter Mittel zum Festhalten der Halteglieder in den Sitzen umfasst;
**dadurch gekennzeichnet, dass** das Festhaltemittel eine Klammer (48) mit mindestens einem Arm umfasst, wobei die genannten Flanschabschnitte eines ersten der genannten Flansche jeweils mindestens eine jeweilige Öffnung (46) umfassen, die mit einer entsprechenden, im jeweiligen Halteglied gebildeten Buchse (44) ausgerichtet ist, wenn das Halteglied in seinem Sitz sitzt, wobei der genannte mindestens eine Arm durch die genannte mindestens eine Öffnung (46) und in die entsprechende Buchse (44) steckbar ist.

2. Ventil nach Anspruch 1, wobei die genannten Vorsprünge (24) vom Gehäuse (12) radial in den Durchgang ragen.

3. Ventil nach einem der vorangehenden Ansprüche, wobei sich die genannten jeweiligen Flansche radial in das Gehäuse hinein erstrecken.

4. Ventil nach einem der Ansprüche 1 bis 3, wobei das Gehäuse eine ringförmige Wand (16) umfasst, wobei sich von einem jeweiligen Ende derselben die genannten Flansche erstrecken und die ringförmige Wand (16) eine innere Oberfläche hat, von der die genannten Vorsprünge ragen.

5. Ventil nach einem der vorangehenden Ansprüche, wobei die genannten Halteglieder (40) bei relativer Drehung des genannten Querriegels und des genannten Gehäuses um die Längsachse des genannten Durchgangs mit ihren jeweiligen Sitzen (23) in Eingriff treten können.

6. Ventil nach Anspruch 5, wobei die genannten Sitzoberfläche konkav ist und die genannten Halteglieder (40) eine Oberfläche zum Eingreifen mit dem jeweiligen Sitz, die entsprechend gekrümmt ist, haben.

7. Ventil nach einem der vorangehenden Ansprüche, wobei die jeweilige Buchse (44) eine Durchgangsbohrung umfasst und jeder der Flanschabschnitte des anderen der Flansche eine entsprechende Buchse zum Aufnehmen des genannten mindestens einen Arms, wenn er durch die genannte Durchgangsbohrung gesteckt wird, umfasst.

8. Ventil nach Anspruch 7, wobei jede im genannten anderen Flansch vorgesehene Buchse eine Blindöffnung umfasst.

## Revendications

1. Clapet (10) comportant un logement à extrémité ouverte (12) définissant un passage au travers duquel un fluide peut s'écouler en cours d'utilisation ; un ensemble de fermeture de clapet (14) pouvant être monté dans le logement, l'ensemble de fermeture de clapet comprenant une pièce transversale (32, 38), un organe de support respectif (40) étant mis en oeuvre à chaque extrémité de la pièce transversale ; un siège respectif (23) mis en oeuvre dans le logement pour chaque organe de support, chaque organe de support étant en mesure d'être mis en prise avec un quelconque respectif desdits sièges à des fins de montage de la pièce transversale en travers du passage ; une bride respective (18, 20) mise en oeuvre à chaque extrémité du logement, chaque bride s'étendant vers l'intérieur du logement, et s'étendant au moins partiellement autour de la périphérie de l'extrémité respective, dans lequel lesdits sièges sont mis en oeuvre sur une partie saillante respective (24) qui fait saillie depuis le logement vers l'intérieur du passage, une partie respective de chaque bride coïncidant avec les parties saillantes (24), au moins ladite partie de bride s'étendant plus encore vers l'intérieur par rapport à ladite partie saillante respective, le clapet comprenant par ailleurs un moyen destiné à retenir les organes de support dans les sièges, **caractérisé en ce que** le moyen de retenue comporte un étrier (48) ayant au moins un montant, chacune desdites parties de bride d'une première desdites brides comprenant au moins une ouverture respective (46) alignée sur une douille correspondante (44) formée dans l'organe de support respectif quand l'organe de support est placé dans son siège, ledit au moins un montant étant en mesure d'être inséré au travers de ladite au moins une ouverture (46) et dans la douille correspondante (44).

2. Clapet selon la revendication 1, dans lequel lesdites parties saillantes (24) font saillie depuis le logement (12) radialement vers l'intérieur du passage.

3. Clapet selon l'une quelconque des revendications précédentes, dans lequel lesdites brides respective s'étendent radialement vers l'intérieur du logement.

4. Clapet selon l'une quelconque des revendications 1 à 3, dans lequel le logement comporte une paroi annulaire (16) depuis une extrémité respective de laquelle lesdites brides s'étendent, la paroi annulaire (16) ayant une surface intérieure depuis laquelle lesdites parties saillantes font saillie.

5. Clapet selon l'une quelconque des revendications précédentes, dans lequel lesdits organes de support (40) sont en mesure d'être mis en prise avec leurs sièges respectifs (23) lors de la rotation relative de ladite pièce transversale et dudit logement autour de l'axe longitudinal dudit passage.

6. Clapet selon la revendication 5, dans lequel ladite surface de siège est concave et lesdits organes de support (40) ont une surface à des fins de mise en prise avec le siège respectif qui est courbe de manière correspondante.

7. Clapet selon l'une quelconque des revendications précédentes, dans lequel la douille respective (44) comporte un alésage traversant, et chacune des parties de bride de l'autre des brides comprend une douille correspondante pour recevoir ledit au moins un montant lors de l'insertion au travers dudit alésage traversant.

8. Clapet selon la revendication 7, dans lequel chaque douille mise en oeuvre dans ladite autre bride comporte une ouverture borgne.
